# EUROPEAN PATENT SPECIFICATION

(11) **EP 2 963 263 B1**
(45) Date of publication and mention of the grant of the patent: **07.02.2024**
(21) Application number: 13876142.4
(22) Date of filing: 27.12.2013
(51) Int. Cl.: F02B 37/18, F02B 37/12, F02D 41/10, F02D 41/18, F02D 41/00

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(30) Priority: 01.03.2013 JP 2013040926
(43) Date of publication of application: 06.01.2016
(73) Proprietor: Mitsubishi Jidosha Kogyo Kabushiki Kaisha, Tokyo 108-8410 (JP)
(72) Inventor: MIHARA, Noriyuki, Tokyo 108-8410 (JP)
(74) Representative: Vossius & Partner Patentanwälte Rechtsanwälte mbB
(86) International application number: PCT/JP2013/085046
(87) International publication number: WO 2014/132544

(56) References cited:
- WO-A1-99/53183
- DE-A1- 3 939 754
- DE-A1- 4 330 368
- JP-A- H0 381 540
- JP-A- H0 861 074
- JP-A- H01 271 644
- JP-A- H03 294 623
- JP-A- H07 150 990
- JP-A- 2006 525 463
- JP-U- H02 131 033

## Description

### Technical Field

The present invention relates to a control device for an internal combustion engine, and more particularly to operation control of a waste gate valve.

### Background Art

Heretofore, an internal combustion engine has been provided with a supercharger such as a turbocharger to improve output performance and fuel efficiency. In such an internal combustion engine including a supercharger, there is provided a supercharging pressure adjustment device for adjusting pressure of intake air injected into a combustion chamber of the internal combustion engine, or supercharging pressure. The supercharging pressure adjustment device includes: a bypass passage that is provided in an exhaust pipe so that exhaust gas to be injected into an exhaust turbine of a turbocharger is allowed to detour downstream of the exhaust turbine; a waste gate valve for adjusting a flow rate of exhaust gas flowing to the bypass passage; a positive pressure type actuator for adjusting opening of the waste gate valve; and a pressure control valve for adjusting pressure of air to be introduced into the actuator.

In such a supercharging pressure adjustment device in which opening of the waste gate valve is adjusted by a positive pressure type actuator, the pressure control valve adjusts pressure of a part of intake air supercharged by the turbocharger so that opening of the waste gate valve is set for a target supercharging pressure, and the air whose pressure has been adjusted is introduced into the actuator. The pressure of the intake air to be injected into the combustion chamber of the engine, or supercharging pressure, is controlled by introducing the air, whose pressure has been adjusted, into the actuator.

However, in a case described above, where opening of the waste gate valve is controlled by a positive pressure type actuator, if the waste gate valve is required to be fully opened in a case where required supercharging pressure is low, for example, it is impossible to increase pressure of air to be introduced into the actuator. As a result, it is difficult to allow the waste gate valve to be fully opened.

Thus, in Patent Document 1, the waste gate valve is driven by an electric actuator that is capable of controlling the opening of the waste gate valve without using supercharged air.

Patent Document 2 describes a method for controlling the drive power of a motor vehicle having a spark-ignition engine equipped with an air charger and a throttle device through which air is supplied to the engine, the drive power of the engine being controlled via a control means by adjusting said throttle device and said air charger.

### Prior Art Document

### Patent Document

Patent Document 1: Japanese Patent Laid-Open No. 2006-274831
Patent Document 2: DE 43 30 368 A1

### Summary of the Invention

### Problems to be solved by the Invention

In a control device for an internal combustion engine with a turbocharger in Patent Document 1 described above, during transition such as acceleration of a vehicle, a target opening of a waste gate valve is calculated on the basis of a difference between a target supercharging pressure and an actual supercharging pressure so that an electric actuator adjusts opening of the waste gate valve to the target opening.

However, if similar control is applied to a steady-state running in which a vehicle is running at a constant speed, and a slow acceleration, the throttle opening can be small and the supercharging pressure can be high, depending on a target supercharging pressure. As a result, a pressure loss of the throttle portion may increase.

Thus, a pumping loss within the throttle portion may increase, which causes fuel efficiency to deteriorate. That is not preferable.

The present invention has been made to solve the problem described above, and an object of the present invention is to provide a control device for an internal combustion engine, capable of allowing a vehicle to achieve excellent acceleration performance as well as excellent fuel efficiency.

### Means for Solving the Problems

In order to achieve the object above, the present invention is configured as set forth in the appended claims.

### Advantageous Effects of the Invention

According to the invention of Claim 1, since the intake air amount adjusting unit adjusts an actual amount of intake air of the internal combustion engine, or output torque, until the intake air amount adjusting unit becomes fully open, it is possible to increase a flow rate of exhaust gas bypassing the turbine of the supercharging unit as well as to prevent needless supercharging by reducing the amount of air supercharged by the supercharging unit to a target amount by the intake air amount adjusting unit. As a result, it is possible to reduce a pumping loss caused by increase in negative pressure generated by the intake air amount adjusting unit, so that fuel efficiency can be improved.

In addition, according to the invention of Claim 1, in a case where a load applied to the internal combustion engine increases after opening of the waste gate valve is set so that the actual amount of intake air becomes minimum, namely is set to fully open or an equivalent to fully open, while the vehicle is running with the predetermined first acceleration or less, a flow rate of exhaust gas bypassing the supercharging unit is increased while the output torque of the internal combustion engine is increased by increasing opening of the intake air amount adjusting unit as the load increases. As a result, a rise in exhaust pressure of the internal combustion engine is reduced, so that it is possible to improve fuel efficiency without deteriorating acceleration performance of the vehicle.

Further, according to the invention of Claim 1, in a case where a load applied to the internal combustion engine increases after the waste gate valve is operated toward the closed side while the vehicle is running with the predetermined second acceleration larger than the predetermined first acceleration, or more, exhaust gas discharged from the internal combustion engine is actively injected into the turbine of the supercharging unit by increasing opening of the intake air amount adjusting unit as the load increases. As a result, it is possible to increase the output torque of the internal combustion engine by increasing supercharging pressure to increase the actual amount of intake air, so that the acceleration performance of vehicle can be improved.

Furthermore, according to the invention of Claim 5, in a case where a load applied to the internal combustion engine is equivalent to a full load of the internal combustion engine, since opening of the waste gate valve is adjusted so that the actual amount of intake air becomes the target amount, it is possible to prevent the supercharging unit from being broken due to a surge, overspeed, and the like.

### Brief Description of the Drawings

FIG. 1 is a schematic diagram of a direct-injection gasoline engine to which a control device for an internal combustion engine in accordance with the present invention is applied.
FIG. 2 is a control flow chart of operation control of an electronically controlled throttle valve and an electric waste gate valve, performed by an engine control unit.
FIG. 3 shows an example of operation of the electronically controlled throttle valve and the electric waste gate valve during steady-state running or slow acceleration of a vehicle.
FIG. 4 shows an example of operation of the electronically controlled throttle valve and the electric waste gate valve during rapid acceleration of the vehicle.
FIG. 5 is a control map of the electric waste gate valve during steady-state running or slow acceleration of the vehicle.
FIG. 6 shows an example of operation of the electronically controlled throttle valve and the electric waste gate valve during steady-state running or slow acceleration of the vehicle in chronological order.
FIG. 7 shows an example of operation of the electronically controlled throttle valve and the electric waste gate valve during rapid acceleration of the vehicle in chronological order.

### Mode for Carrying out the Invention

Hereinafter, an embodiment of the present invention will be described on the basis of the accompanying drawings.

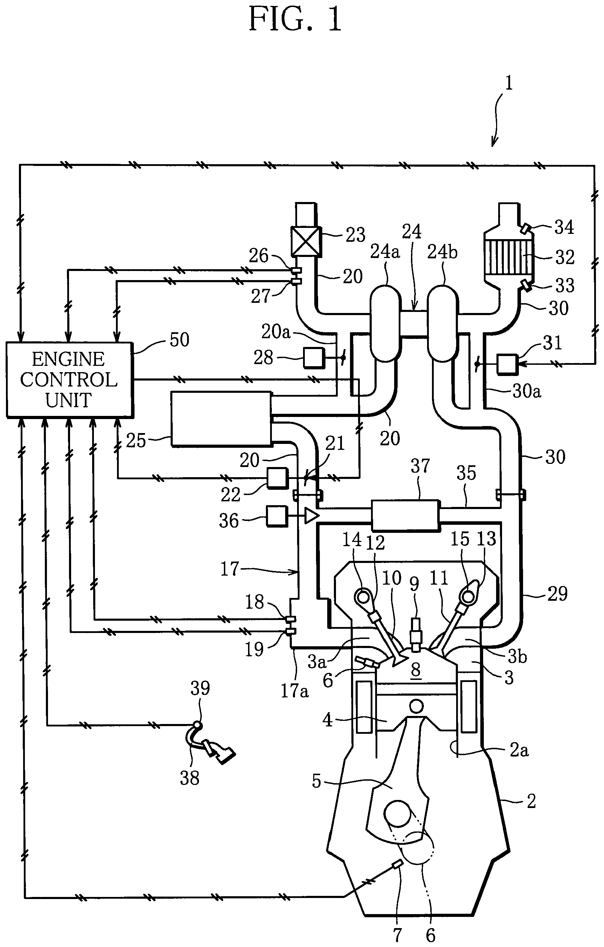

FIG. 1 is a schematic diagram of a direct-injection gasoline engine to which a control device for an internal combustion engine is applied (hereinafter referred to as an engine 1) (internal combustion engine).

As shown in FIG. 1, the engine 1 is a four-stroke in-line four-cylinder gasoline engine of a direct-injection type in which fuel is injected from a fuel injection valve 16 provided in a cylinder head 3 into a combustion chamber 8. FIG. 1 shows a longitudinal section of one cylinder of the engine 1. Since it is deemed that other cylinders have the same structure, they are not shown and there is no duplicated description on them.

As shown in FIG. 1, the engine 1 is composed of a cylinder block 2 on which the cylinder head 3 is mounted.

The cylinder block 2 is provided with a cylinder 2a. In the cylinder 2a, a piston 4 is vertically slidably provided. The piston 4 is connected to a crankshaft 6 through a connecting rod 5. In addition, the cylinder block 2 is provided with a crank angle sensor 7 that detects a rotational speed of the engine 1 and a phase of the crankshaft 6. The combustion chamber 8 is defined by the cylinder head 3, the cylinder 2a, and the piston 4.

In the cylinder head 3, an ignition plug 9 is provided so as to face the combustion chamber 8. In addition, the cylinder head 3 is provided with an intake port 3a that extends from the combustion chamber 8 to one side face of the cylinder head 3. Further, the cylinder head 3 is provided with an exhaust port 3b that extends from the combustion chamber 8 to the other side face of the cylinder head 3. The cylinder head 3 includes an intake valve 10 that allows the combustion chamber 8 and the intake port 3a to communicate with each other and blocks them, and an exhaust valve 11 that allows the combustion chamber 8 and the exhaust port 3b to communicate with each other and blocks them. In addition, in an upper portion of the cylinder head 3, there is provided an intake cam shaft 14 with an intake cam 12 for driving the intake valve 10. Further, in the upper portion of the cylinder head 3, there is provided an exhaust cam shaft 15 with an exhaust cam 13 for driving the exhaust valve 11. Furthermore, in the upper portion of the cylinder head 3, there is provided a cam angle sensor (not shown) that detects a phase of each of the intake cam shaft 14 and the exhaust cam shaft 15. The intake cam shaft 14 and the exhaust cam shaft 15 include a variable cam phase mechanism (not shown) that varies a phase of each of the intake cam 12 and the exhaust cam 13. To one side face of the cylinder head 3, there is connected an intake manifold (intake passage) 17 that distributes air inhaled to each of cylinders so as to communicate with the intake port 3a. On a side of the cylinder head 3 where the intake manifold 17 is connected, the fuel injection valve 16 is provided so as to face the combustion chamber 8.

The intake manifold 17 is provided with a surge tank 17a. The surge tank 17a temporarily stores inhaled air. The surge tank 17a is provided with an intake pressure sensor 18 that detects pressure of intake air, and an intake air temperature sensor 19 that detects temperature of the intake air. Both sensors project into the surge tank 17a. In addition, at an upstream end of the intake manifold 17, there are provided an intake pipe (intake passage) 20, and an electronically controlled throttle valve (intake air amount adjusting unit) 21 that adjusts the amount of intake air. The electronically controlled throttle valve 21 includes a throttle position sensor 22 that detects opening of the throttle valve.

In an intake pipe 20 on an upstream side of the electronically controlled throttle valve 21, an air cleaner 23, a compressor housing (compressor) 24a of a turbocharger (supercharging unit) 24, and an intercooler 25, are provided so as to connect to the intake manifold 17 through the intake pipe 20. In the intake pipe 20 between the compressor housing 24a of the turbocharger 24 and the air cleaner 23, there are provided an airflow sensor (intake air amount detecting unit) 26 that detects a flow rate of intake air, or the amount of intake air, and an intake air temperature sensor 27 that detects temperature of fresh air so that the sensors project into the intake pipe 20.

The air cleaner 23 removes contaminations in fresh air inhaled from most upstream.

The turbocharger 24 is configured to rotate its turbine by using exhaust gas injected by a turbine housing 24b described later to compress intake air by using its compressor provided coaxially with the turbine.

The intercooler 25 cools the fresh air at high temperature caused by being compressed by the compressor of the turbocharger 24.

In addition, a bypass passage 20a is provided so as to allow the intake pipe 20 on an upstream side of the compressor housing 24a of the turbocharger 24 and the intake pipe 20 on a downstream side thereof to communicate with each other. The bypass passage 20a is provided with a bypass valve 28 that adjusts the amount of intake air flowing through the bypass passage 20a. The bypass passage 20a is configured to allow the intake air compressed by the compressor of the turbocharger 24 to detour upstream of the compressor housing 24a.

On the other hand, an exhaust manifold (exhaust passage) 29 is connected to a side face of the cylinder head 3 opposite to the side face of the cylinder head 3 to which the intake manifold 17 is connected, so as to communicate with the exhaust port 3b. In a downstream end of the exhaust manifold 29, there is connected an exhaust pipe (exhaust passage) 30 so as to communicate with the exhaust manifold 29. In addition, in downstream of the exhaust pipe 30, there is provided the turbine housing (turbine) 24b that injects exhaust gas into the turbocharger 24 so as to communicate with the exhaust pipe 30. Further, a bypass passage (corresponding to the bypass passage of the present invention) 30a is provided so as to allow the exhaust pipe 30 on an upstream side of the turbine housing 24b of the turbocharger 24 and the exhaust pipe 30 on a downstream side thereof to communicate with each other. In the bypass passage 30a, there is provided an electric waste gate valve (corresponding to the waste gate valve of the present invention) 31. The bypass passage 30a is configured to allow exhaust gas flowing into the turbine housing of the turbocharger 24 to detour downstream of the turbine housing 24b.

The electric waste gate valve 31 allows a butterfly valve to operate by using power of a motor or the like to adjust a flow rate of exhaust gas flowing into the bypass passage 30a, that is, the electric waste gate valve 31 adjusts a flow rate of exhaust gas flowing into the turbine housing 24b of the turbocharger 24. The electric waste gate valve 31 includes a position sensor that detects opening of a waste gate.

The exhaust pipe 30 provided downstream of the turbine housing 24b of the turbocharger 24 includes a three way catalyst 32 having a function of cleaning up CO, HC, and NOx in exhaust gas. On an upstream side of the three way catalyst 32 of the exhaust pipe 30, an air-fuel ratio sensor 33 that detects oxygen concentration of exhaust gas flowing into the three way catalyst 32 is provided so as to project into the exhaust pipe 30. In addition, on a downstream side of the three way catalyst 32 of the exhaust pipe 30, an O2 sensor 34 that detects oxygen concentration of exhaust gas passing through the three way catalyst 32 is provided so as to project into the exhaust pipe 30.

In the intake manifold 17 and the exhaust manifold 29, an exhaust gas recirculation passage 35 that returns a part of exhaust gas to an intake side, or recirculates exhaust gas to the intake side, is provided so as to allow the manifolds to communicate with each other. The exhaust gas recirculation passage 35 is connected to the intake manifold 17 provided upstream of the surge tank 17a through an exhaust gas recirculation valve 36 that adjusts the amount of exhaust gas returning to the intake side, or a flow rate of exhaust gas to be recirculated. In addition, the exhaust gas recirculation passage 35 is provided with an exhaust gas recirculation cooler 37 that cools exhaust gas to be injected into the intake manifold 17.

Further, there is provided an engine control unit 50 that is a control device for performing overall control including operation control of the engine 1, and that includes an input-output device, a storage device (such as a ROM, a RAM, and a nonvolatile RAM), a central processing unit (CPU), and the like.

On an input side of the engine control unit 50, there are electrically connected sensors such as the crank angle sensor 7, the intake pressure sensor 18, the intake air temperature sensors 19 and 27, the throttle position sensor 22, the airflow sensor 26, the air-fuel ratio sensor 33, the O2 sensor 34, and an accelerator position sensor 39 that detects accelerator opening that is a manipulated variable of an accelerator pedal 38, and various devices such as the bypass valve 28, the electric waste gate valve 31, the exhaust gas recirculation valve 36, as well as various sensors such as a vehicle speed sensor (not shown) that detects a speed of the vehicle. Accordingly, information detected by the sensors above is inputted into the engine control unit 50.

On the other hand, on an output side of the engine control unit 50, there are electrically connected various devices described above such as the ignition plug 9, the fuel injection valve 16, the electronically controlled throttle valve 21, the bypass valve 28, the electric waste gate valve 31, and the exhaust gas recirculation valve 36. The various devices above receive respective information pieces calculated on the basis of information detected by the various sensors, such as ignition timing, the amount of fuel injection, fuel injection timing, throttle opening, bypass valve opening, waste gate valve opening, and exhaust gas recirculation valve opening.

The engine control unit 50 is configured to calculate a target amount of intake air on the basis of the accelerator opening supplied by the accelerator position sensor 39, as well as to calculate an actual amount of intake air to be injected into the combustion chamber 8 on the basis of pressure of the intake air (supercharging pressure), temperature of the intake air, the amount of intake air, and temperature of fresh intake air, supplied by the intake pressure sensor 18, the intake air temperature sensors 19 and 27, and the airflow sensor 26. Actual torque of the engine 1 is calculated by the engine control unit 50 on the basis of the actual amount of intake air, and an engine rotational speed. In addition, target torque of the engine 1 is calculated by the engine control unit 50 on the basis of the target amount of intake air.

In addition, the engine control unit 50 performs operation control of the electronically controlled throttle valve 21 and the electric waste gate valve 31 on the basis of an operation state of the engine 1 and a running state of the vehicle as well as a driver's request.

Hereinafter, operation control of the electronically controlled throttle valve 21 and the electric waste gate valve 31, performed by the engine control unit 50 of the control device for an internal combustion engine in accordance with the present invention, configured as above, will be described.

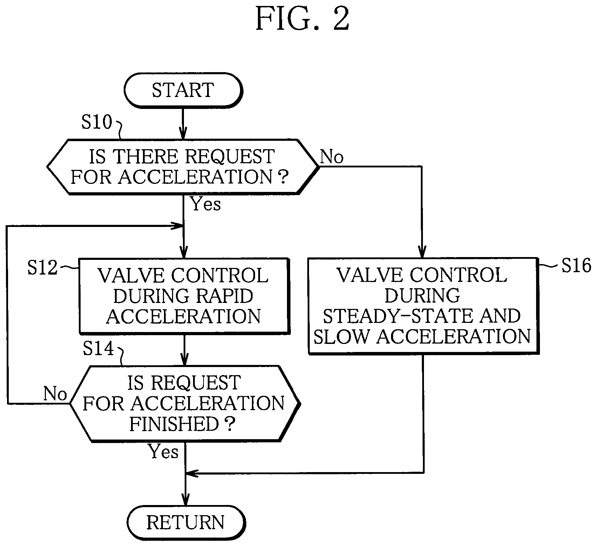

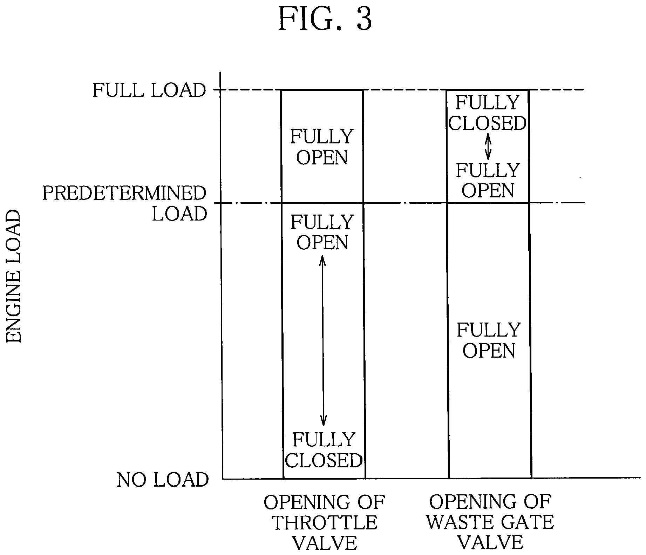

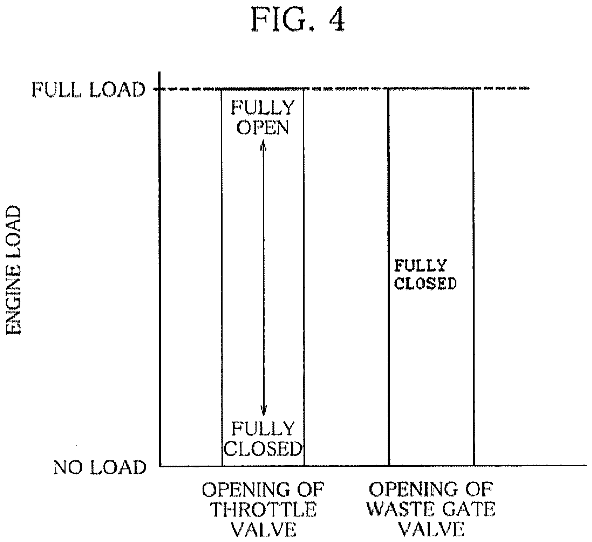

FIG. 2 is a control flow chart of operation control of the electronically controlled throttle valve 21 and the electric waste gate valve 31, performed by the engine control unit 50. FIG. 3 shows an example of operation of the electronically controlled throttle valve 21 and the electric waste gate valve 31 during steady-state running or slow acceleration (running with a predetermined first acceleration or less) of the vehicle. FIG. 4 shows an example of operation of the electronically controlled throttle valve and the electric waste gate valve during rapid acceleration (running with a predetermined second acceleration larger than the predetermined first acceleration, or more) of the vehicle. A vertical axis of each of FIGS. 3 and 4 shows an engine load (corresponding to a load applied to the internal combustion engine of the present invention), or a load applied to the engine 1. Throttle valve opening in FIGS. 3 and 4 shows opening of the electronically controlled throttle valve 21, as well as waste gate valve opening shows opening of the electric waste gate valve 31, and the vertical axis shows the engine load. In addition, description "FULLY OPEN" and "FULLY CLOSED" in a bar graph of each of FIGS. 3 and 4 shows opening of each of the valves. Further, the following descriptions: in the bar of the throttle valve within a range from no load to a predetermined load in FIG. 3; in the bar of the waste gate valve within a range from the predetermined load to a full load in Fig. 3; and in the bar of the throttle valve within a range from the no load to the full load in FIG. 4, show that opening of each of the electronically controlled throttle valve 21 or the electric waste gate valve 31 varies in accordance with an engine load. That is, in a case of the electronically controlled throttle valve 21 in FIG. 3, for example, if the engine load varies from the no load to the predetermined load, opening of the electronically controlled throttle valve 21 becomes fully open from fully closed. FIGS. 3 and 4 show opening of the electronically controlled throttle valve 21 or the electric waste gate valve 31 at an engine load during steady-state running, slow acceleration, or rapid acceleration, of the vehicle.

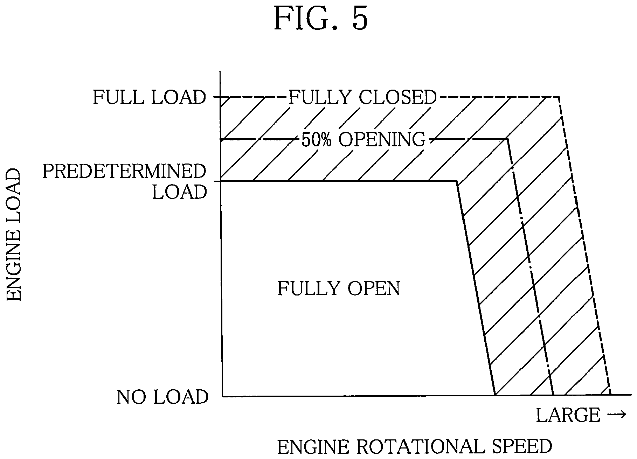

FIG. 5 is a control map of the electric waste gate valve 31 during steady-state running or slow acceleration of the vehicle. In FIG. 5, a horizontal axis shows an engine rotational speed, and a vertical axis shows an engine load. In addition, in FIG. 5, descriptions "FULLY CLOSED", "50% OPENING", and "FULLY OPEN" show opening of the electric waste gate valve 31. Further, a hatched area of FIG. 5 shows an area in which opening of the electric waste gate valve 31 varies in accordance with an engine load or an engine rotational speed, or a range corresponding to the range from the predetermined load to the full load in FIG. 3. FIG. 5 shows opening of the electric waste gate valve 31 in accordance with an engine rotational speed and an engine load.

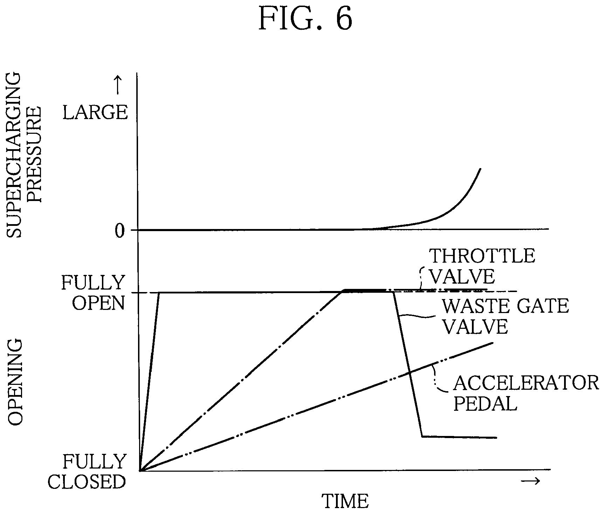

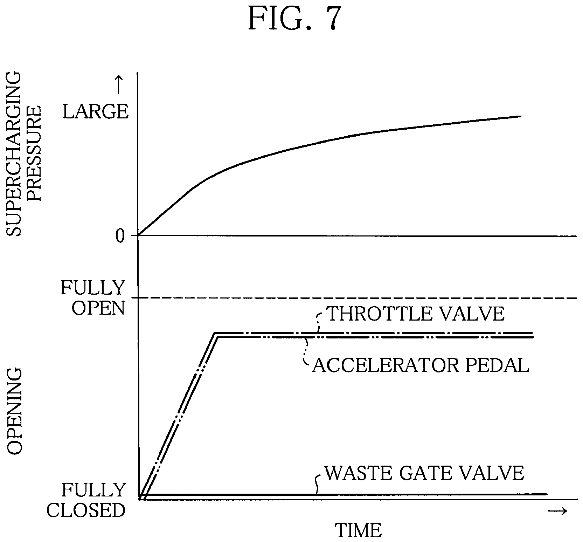

FIG. 6 shows an example of operation of the electronically controlled throttle valve 21 and the electric waste gate valve 31 during steady-state running or slow acceleration of the vehicle in chronological order. FIG. 7 shows an example of operation of the electronically controlled throttle valve 21 and the electric waste gate valve 31 during rapid acceleration of the vehicle in chronological order. An upper section of each of FIGS. 6 and 7 shows supercharging pressure, or intake air pressure detected by the intake pressure sensor 18, and a lower section thereof shows opening. In the lower section of each of FIGS. 6 and 7, a solid line, a dashed line, and a two-dot chain line, show opening of the electric waste gate valve 31, opening of the electronically controlled throttle valve 21, and a manipulated variable of the accelerator pedal 38 or accelerator opening, respectively. In FIGS. 6 and 7, in order to make an overlapped portion of each of lines clear, each of the lines is described so that the lines are shifted from each other, such as opening of the electronically controlled throttle valve 21 and the accelerator opening in FIG. 7, for example.

As shown in FIG. 2, in step S10, it is determined whether or not there is a request for acceleration. Specifically, it is determined whether or not a driver operates the accelerator pedal 38 so that the amount of increase in accelerator opening per unit time becomes a predetermined amount or more to rapidly accelerate a vehicle. If a determined result is true (Yes), that is, the driver operates the accelerator pedal 38 so that the amount of increase in accelerator opening per unit time becomes the predetermined amount or more for a request for acceleration in order to rapidly accelerate the vehicle, as shown in FIG. 7, processing proceeds to step S12. Conversely, if the determined result is false (No), that is, the driver does not operate the accelerator pedal 38 so that the amount of increase in accelerator opening per unit time becomes the predetermined amount or more in order to rapidly accelerate the vehicle, or there is no request for the acceleration, as shown in FIG. 6, the processing proceeds to step S16. Although a request for acceleration is determined by using the amount of increase in accelerator opening per unit time, the amount of increase in torque required per unit time may be also available.

In step S12, valve control during rapid acceleration is performed. Specifically, as shown in FIGS. 4 and 7, the electric waste gate valve 31 is fully closed regardless of an engine load. Then, feedback control is applied to opening of the electronically controlled throttle valve 21 so that an actual amount of intake air generates output torque of the engine 1, corresponding to an engine load. In a case where the electronically controlled throttle valve 21 is fully opened, as well as a load applied to the engine 1 is equivalent to a full load of the engine 1, and the actual amount of intake air exceeds a target amount of intake air, the feedback control is applied to opening of the electric waste gate valve 31 so that the actual amount of intake air becomes the target amount of intake air, and then the processing proceeds to step S14. Although the electric waste gate valve 31 is fully closed regardless of an engine load, if output torque satisfying driver's request for acceleration can be generated, the electric waste gate valve 31 may be operated to a closed side but not fully closed.

During a high speed and a high load, since the amount of intake air per unit time is large, the amount of discharged exhaust gas (flow rate of exhaust gas) also becomes large. As a result, a rotational speed of a turbine of the turbocharger 24 becomes high, and a rotational speed of a compressor concentric with the turbine becomes high. Accordingly, a calculated flow velocity of intake air in the compressor housing 24a exceeds sonic speed to cause a surge state inside the compressor housing 24a, where a wide pressure fluctuation and a shock wave occur. If the compressor falls in the surge state, supercharging pressure cannot rise and the compressor may be broken. Thus, in a case where an engine load applied to the engine 1 is equivalent to the full load of the engine 1, the feedback control is applied to opening of the electric waste gate valve 31 so that an actual amount of intake air becomes the target amount of intake air, and then the electric waste gate valve 31 is appropriately opened to adjust a rotational speed of the turbine so that the compressor does not fall in the surge state, whereby it is possible to prevent the turbocharger 24 from being broken due to overspeed and the like.

In step S14, it is determined whether the request for acceleration is finished or not. Specifically, it is determined whether a manipulated variable of the accelerator pedal 38 by the driver, or accelerator opening, is less than a predetermined value or not. That is, in the present determination, it is determined whether the driver's request for acceleration is lost or not. If a determination result is true (Yes), that is the accelerator pedal 38 is operated to allow the accelerator opening to be less than the predetermined value, so that the request for acceleration is finished, and then a present routine is returned. Conversely, if the determination result is false (No), that is the accelerator pedal 38 is operated to allow the accelerator opening to be equal to or more than the predetermined value, it is determined that the request of acceleration continues, and then the processing returns to step S12.

In step S16, valve control during steady-state running and slow acceleration is performed. Specifically, as shown in FIGS. 3, 5, and 6, first the electric waste gate valve 31 is fully opened, or is set at opening at which the turbocharger 24 does not perform supercharging, or opening at which an actual air flow rate becomes minimum. Then, the feedback control is applied to the electronically controlled throttle valve 21 so that opening thereof allows the actual amount of intake air to generate output torque of the engine 1, corresponding to an engine load. When the electronically controlled throttle valve 21 is fully opened, while opening of the electronically controlled throttle valve 21 is maintained, the feedback control is applied to opening of the electric waste gate valve 31 on the basis of the map of FIG. 6 so that output torque of the engine 1 corresponds to an engine load, or an actual amount of intake air becomes a target amount of intake air. Thus, as with the case during rapid acceleration of the vehicle, in a case where the electronically controlled throttle valve 21 is fully opened, as well as the load applied to the engine 1 is equivalent to the full load of the engine, and the actual amount of intake air exceeds the target amount of intake air, opening of the electric waste gate valve 31 is adjusted so that the actual amount of intake air becomes the target amount of intake air, and then the present routine is returned.

As described above, in the control device for an internal combustion engine in accordance with the present invention, in a case where a vehicle is in a steady running state or in a slow acceleration state, that is in a case where the vehicle is running with a predetermined first acceleration or less, the electric waste gate valve 31 is fully opened, or is set at opening at which the turbocharger 24 does not perform supercharging, or opening at which an actual air flow rate becomes minimum. Then, the feedback control is applied to the electronically controlled throttle valve 21 so that opening thereof allows an actual amount of intake air to generate output torque of the engine 1 corresponding to an engine load. When the electronically controlled throttle valve 21 is fully opened, while opening of the electronically controlled throttle valve 21 is maintained, the feedback control is applied to opening of the electric waste gate valve 31 on the basis of the map of FIG. 6 so that output torque of the engine 1 corresponds to an engine load, or an actual amount of intake air becomes a target amount of intake air. In addition, in a case where the vehicle is in a rapid acceleration state, that is, in a case where the vehicle is running with a predetermined second acceleration larger than the predetermined first acceleration, or more, the electric waste gate valve 31 is fully closed regardless of an engine load. Then, the feedback control is applied to the electronically controlled throttle valve 21 so that opening thereof allows an actual amount of intake air to generate output torque of the engine 1 corresponding to an engine load. In a case where the electronically controlled throttle valve 21 is fully opened, as well as a load applied to the engine 1 is equivalent to the full load of the engine, and the actual amount of intake air exceeds the target amount of intake air, the feedback control is applied to opening of the electric waste gate valve 31 so that the actual amount of intake air becomes the target amount of intake air.

Thus, until the electronically controlled throttle valve 21 becomes fully open, it is possible to increase a flow rate of exhaust gas bypassing the turbine housing 24b of the turbocharger 24 by adjusting an actual amount of intake air of the engine 1, or output torque, by using the electronically controlled throttle valve 21. As a result, it is possible to reduce a rise in exhaust pressure with an increase in a flow rate of exhaust gas flowing into the turbine housing 24b of the turbocharger 24 caused by closing the electric waste gate valve 31, so that fuel efficiency of a vehicle can be improved without deteriorating acceleration performance of the vehicle.

In addition, in the present invention, until the electronically controlled throttle valve 21 becomes fully open, the electric waste gate valve 31 maintains fully open or fully open area. As a result, rotation of the turbine of the turbocharger 24 is reduced, so that rotation of the compressor provided coaxially with the turbine is reduced to enable supercharging pressure to be reduced. If air supercharged by the turbocharger 24 is adjusted to a target amount of air by throttling the electronically controlled throttle valve 21 (opening of the electronically controlled throttle valve 21 is reduced), negative pressure occurring in the electronically controlled throttle valve 21 increases so that a pumping loss occurs to perform needless supercharging, however, the present invention can prevent this problem.

Further, in a case where a vehicle is in a steady running state or in a slow acceleration state, that is, in a case where the vehicle is running with the predetermined first acceleration or less, if an engine load applied to the engine 1 increases after the electric waste gate valve 31 is set at opening at which an actual amount of intake air becomes minimum, or set to fully open or an equivalent to fully open, opening of the electronically controlled throttle valve 21 is increased, as the engine load increases, to increase a flow rate of exhaust gas bypassing the turbocharger 24 while output torque of the engine 1 is increased. As a result, a rise in exhaust pressure of the engine 1 is reduced, so that it is possible to improve fuel efficiency of a vehicle without deteriorating acceleration performance of the vehicle.

Furthermore, in a case where a vehicle is in a rapid acceleration state, that is, in a case where the vehicle is running with the predetermined second acceleration larger than the predetermined first acceleration, or more, the electric waste gate valve 31 is fully closed. Then, if an engine load applied to the engine 1 increases, opening of the electronically controlled throttle valve 21 is varied as the engine load increases so that exhaust gas discharged from the engine 1 is actively injected into the turbine housing 24b of the turbocharger 24 to increase supercharging pressure. As a result, an actual amount of intake air is increased to enable output torque of the engine 1 to be increased, so that acceleration performance of a vehicle can be improved.

The aspect of the present invention is not limited to the embodiment described above.

For example, in the present embodiment, the engine 1 is a direct-injection gasoline engine in which fuel is injected from the fuel injection valve 16 into the combustion chamber 8. However, the engine 1 is not limited to this type. It is needless to say that even a port-injection gasoline engine in which fuel is injected into the intake port 3a is surely available.

In addition, although the present example uses the electric waste gate valve 31 of a butterfly type that is driven by a motor and the like, control of the present invention may be performed by using a plurality of actuators of a diaphragm type, or the like, for example.

### Explanation of Reference Signs

- 1: engine (internal combustion engine)
- 17: intake manifold (intake passage)
- 20: intake pipe (intake passage)
- 21: electronically controlled throttle valve (intake air amount adjusting unit)
- 24: turbocharger (supercharging unit)
- 24a: compressor housing (compressor)
- 24b: turbine housing (turbine)
- 26: airflow sensor (intake air amount detecting unit)
- 29: exhaust manifold (exhaust passage)
- 30: exhaust pipe (exhaust passage)
- 30a: bypass passage
- 31: electric waste gate valve (waste gate valve)
- 50: ECU (target amount of intake air calculating unit, operation control unit)

## Claims

1. A control device for an internal combustion engine, the control device comprising:
a supercharging unit that includes a turbine for being provided in an exhaust passage of the internal combustion engine mounted on a vehicle, and a compressor for being provided in an intake passage of the internal combustion engine and is driven by the turbine;
an intake air amount adjusting unit for being provided in the intake passage and that adjusts the actual amount of intake air;
an intake air amount detecting unit for being provided in the intake passage and detects the actual amount of intake air;
a waste gate valve that is provided in a bypass passage bypassing the turbine and adjusts a flow rate of exhaust gas flowing to the bypass passage;
a target amount of intake air calculating unit that calculates a target amount of intake air of the internal combustion engine on the basis of a load applied to the internal combustion engine; and
an operation control unit that controls opening of the intake air amount adjusting unit and the waste gate valve in response to a running state of the vehicle and an operation state of the internal combustion engine,
wherein the operation control unit adjusts opening of the waste gate valve so that the actual amount of intake air of the internal combustion engine becomes the target amount of intake air, after opening of the intake air amount adjusting unit becomes fully open by increasing the opening as the load applied to the internal combustion engine increases, when the vehicle is running with a predetermined first acceleration or less,
wherein the operation control unit adjusts opening of the waste gate valve so that the actual amount of intake air becomes minimum before increasing opening of the intake air amount adjusting unit as the load applied to the internal combustion engine increases, when the vehicle is running with a predetermined first acceleration or less, and
wherein the operation control unit is configured to operate the waste gate valve toward the closed side before increasing opening of the intake air amount adjusting unit as the load applied to the internal combustion engine increases, when the vehicle is running with a predetermined second acceleration larger than the predetermined first acceleration, or more.

2. The control device for an internal combustion engine according to Claim 1, wherein the intake air amount adjusting unit is a throttle valve, and wherein the operation control unit adjusts the throttle valve so that opening of the throttle valve allows the actual amount of intake air to become the target amount of intake air when the vehicle is running with the predetermined first acceleration or less, and wherein the operation control unit adjusts opening of the waste gate valve so that the actual amount of intake air of the internal combustion engine becomes the target amount of intake air after the throttle valve is fully opened, while the opening of the throttle valve is maintained.

3. The control device for an internal combustion engine according to Claim 2, wherein the operation control unit allows the waste gate valve to be fully closed regardless of the load, and adjusts opening of the throttle valve so that the actual amount of intake air becomes the target amount of intake air, when the vehicle is running with the predetermined second acceleration or more.

4. The control device for an internal combustion engine according to Claim 3, wherein the predetermined first acceleration or less is a slow acceleration state, and the predetermined second acceleration or more is a rapid acceleration state, and wherein the operation control unit discriminates between the slow acceleration state and the rapid acceleration state on the basis of a variation of accelerator opening per unit time.

5. The control device for an internal combustion engine according to Claim 4, wherein the operation control unit adjusts opening of the waste gate valve so that the actual amount of intake air becomes the target amount in a case where the load applied to the internal combustion engine is equivalent to a full load of the internal combustion engine.

## Patentansprüche

1. Steuerungsvorrichtung für einen Verbrennungsmotor,
wobei die Steuerungsvorrichtung aufweist:
eine Aufladeeinheit, die eine Turbine, die in einem Abgaskanal des an einem Fahrzeug montierten Verbrennungsmotors vorgesehen ist, und einen Kompressor umfasst, der in einem Ansaugkanal des Verbrennungsmotors vorgesehen ist und von der Turbine angetrieben wird;
eine Ansaugluftmengen-Einstelleinheit, die in dem Ansaugkanal vorgesehen ist und die die tatsächliche Ansaugluftmenge einstellt;
eine Ansaugluftmengen-Erfassungseinheit, die in dem Ansaugkanal vorgesehen ist und die tatsächliche Ansaugluftmenge erfasst;
ein Abgasauslassventil, das in einem die Turbine umgehenden Bypass-Kanal angeordnet ist und die Durchflussmenge des in den Bypass-Kanal strömenden Abgases regelt;
eine Ansaugluftsollmengen-Berechnungseinheit, die eine Ansaugluftsollmenge des Verbrennungsmotors auf der Grundlage einer auf den Verbrennungsmotor ausgeübten Last berechnet; und
eine Betriebssteuereinheit, die das Öffnen der Ansaugluftmengen-Einstelleinheit und des Abgasauslassventils in Abhängigkeit von einem Fahrzustand des Fahrzeugs und einem Betriebszustand des Verbrennungsmotors steuert,
wobei die Betriebssteuereinheit die Öffnung des Abgasauslassventils so einstellt, dass die tatsächliche Ansaugluftmenge des Verbrennungsmotors zur Ansaugluftsollmenge wird, nachdem die Öffnung der Ansaugluftmengen-Einstelleinheit vollständig geöffnet ist, indem die Öffnung vergrößert wird, wenn die auf den Verbrennungsmotor ausgeübte Last zunimmt, wenn das Fahrzeug mit einer vorbestimmten ersten Beschleunigung oder weniger fährt,
wobei die Betriebssteuereinheit die Öffnung des Abgasauslassventils so einstellt, dass die tatsächliche Ansaugluftmenge minimal wird, bevor sie die Öffnung der Ansaugluftmengen-Einstelleinheit vergrößert, wenn die auf den Verbrennungsmotor ausgeübte Last zunimmt, wenn das Fahrzeug mit einer vorbestimmten ersten Beschleunigung oder weniger fährt, und
wobei die Betriebssteuereinheit zum Betätigen des Abgasauslassventils zur geschlossenen Seite hin konfiguriert ist, bevor sie die Öffnung der Ansaugluftmengen-Einstelleinheit vergrößert, wenn die auf den Verbrennungsmotor ausgeübte Last zunimmt, wenn das Fahrzeug mit einer vorbestimmten zweiten Beschleunigung, die größer als die vorbestimmte erste Beschleunigung ist, oder mehr fährt.

2. Steuervorrichtung für einen Verbrennungsmotor nach Anspruch 1, wobei die Ansaugluftmengen-Einstelleinheit ein Drosselventil ist, und wobei die Betriebssteuereinheit das Drosselventil so einstellt, dass ein Öffnen des Drosselventils ermöglicht, dass die tatsächliche Ansaugluftmenge zur Ansaugluftsollmenge wird, wenn das Fahrzeug mit der vorbestimmten ersten Beschleunigung oder weniger fährt, und wobei die Betriebssteuereinheit die Öffnung des Abgasauslassventils so einstellt, dass die tatsächliche Ansaugluftmenge des Verbrennungsmotors zur Ansaugluftsollmenge wird, nachdem das Drosselventil vollständig geöffnet ist, während die Öffnung des Drosselventils beibehalten wird.

3. Steuervorrichtung für einen Verbrennungsmotor nach Anspruch 2, wobei die Betriebssteuereinheit ermöglicht, dass das Abgasauslassventil unabhängig von der Last vollständig geschlossen wird, und die Öffnung des Drosselventils so einstellt, dass die tatsächliche Ansaugluftmenge zur Ansaugluftsollmenge wird, wenn das Fahrzeug mit der vorgegebenen zweiten Beschleunigung oder mehr fährt.

4. Steuervorrichtung für einen Verbrennungsmotor nach Anspruch 3, wobei die vorbestimmte erste Beschleunigung oder weniger ein langsamer Beschleunigungszustand ist und die vorbestimmte zweite Beschleunigung oder mehr ein schneller Beschleunigungszustand ist, und wobei die Betriebssteuereinheit zwischen dem langsamen Beschleunigungszustand und dem schnellen Beschleunigungszustand auf der Grundlage einer Änderung einer Gaspedalöffnung pro Zeiteinheit unterscheidet.

5. Steuervorrichtung für einen Verbrennungsmotor nach Anspruch 4, wobei die Betriebssteuereinheit die Öffnung des Abgasauslassventils so einstellt, dass die tatsächliche Ansaugluftmenge zur Sollmenge in einem Fall wird, in dem die an den Verbrennungsmotor ausgeübte Last einer Volllast des Verbrennungsmotors entspricht.

## Revendications

1. Dispositif de commande pour un moteur à combustion interne, le dispositif de commande comprenant :
une unité de suralimentation qui comprend une turbine devant être prévue dans un passage d'échappement du moteur à combustion interne monté dans un véhicule, et un compresseur devant être prévu dans un passage d'admission du moteur à combustion interne et qui est entraîné par la turbine ;
une unité d'ajustement de quantité d'air d'admission devant être prévue dans le passage d'admission et qui ajuste la quantité réelle d'air d'admission ;
une unité de détection de quantité d'air d'admission devant être prévue dans le passage d'admission et qui détecte la quantité réelle d'air d'admission ;
une soupape de décharge qui est prévue dans un passage de dérivation qui contourne la turbine et ajuste un débit de gaz d'échappement qui s'écoule dans le passage de dérivation ;
une unité de calcul de quantité d'air d'admission de cible qui calcule une quantité de cible d'air d'admission du moteur à combustion interne sur la base d'une charge appliquée sur le moteur à combustion interne ; et
une unité de commande de fonctionnement qui commande une ouverture de l'unité d'ajustement de quantité d'air d'admission et de la soupape de décharge en réponse à un état de déplacement du véhicule et à un état de fonctionnement du moteur à combustion interne,
l'unité de commande de fonctionnement ajustant l'ouverture de la soupape de décharge de telle sorte que la quantité réelle d'air d'admission du moteur à combustion interne devient la quantité de cible d'air d'admission, une fois qu'une ouverture de l'unité d'ajustement de quantité d'air d'admission devient entièrement ouverte en augmentant l'ouverture lorsque la charge appliquée sur le moteur à combustion interne augmente, quand le véhicule se déplace avec une première accélération prédéterminée ou moins,
l'unité de commande de fonctionnement ajustant une ouverture de la soupape de décharge de telle sorte que la quantité réelle d'air d'admission devient minimum avant d'augmenter une ouverture de l'unité d'ajustement de quantité d'air d'admission lorsque la charge appliquée sur le moteur à combustion interne augmente, quand le véhicule se déplace avec une première accélération prédéterminée ou moins, et
l'unité de commande de fonctionnement étant configurée pour actionner la soupape de décharge vers le côté fermé avant d'augmenter une ouverture de l'unité d'ajustement de quantité d'air d'admission lorsque la charge appliquée sur le moteur à combustion interne augmente, quand le véhicule se déplace avec une deuxième accélération prédéterminée plus grande que la première accélération prédéterminée, ou plus.

2. Dispositif de commande pour un moteur à combustion interne selon la revendication 1, dans lequel l'unité d'ajustement de quantité d'air d'admission est un papillon des gaz, et l'unité de commande de fonctionnement ajuste le papillon des gaz de telle sorte qu'une ouverture du papillon des gaz permet à la quantité réelle d'air d'admission de devenir la quantité de cible d'air d'admission quand le véhicule se déplace avec la première accélération prédéterminée ou moins, et l'unité de commande de fonctionnement ajuste une ouverture de la soupape de décharge de telle sorte que la quantité réelle d'air d'admission du moteur à combustion interne devient la quantité de cible d'air d'admission une fois que le papillon des gaz est entièrement ouvert, alors que l'ouverture du papillon des gaz est maintenue.

3. Dispositif de commande pour un moteur à combustion interne selon la revendication 2, dans lequel l'unité de commande de fonctionnement permet à la soupape de décharge d'être entièrement fermée indépendamment de la charge, et ajuste une ouverture du papillon des gaz de telle sorte que la quantité réelle d'air d'admission devient la quantité de cible d'air d'admission, quand le véhicule se déplace avec la deuxième accélération prédéterminée ou plus.

4. Dispositif de commande pour un moteur à combustion interne selon la revendication 3, dans lequel la première accélération prédéterminée ou moins est un état d'accélération lente, et la deuxième accélération prédéterminée ou plus est un état d'accélération rapide, et l'unité de commande de fonctionnement fait une discrimination entre l'état d'accélération lente et l'état d'accélération rapide sur la base d'une variation de l'ouverture d'accélérateur par unité de temps.

5. Dispositif de commande pour un moteur à combustion interne selon la revendication 4, dans lequel l'unité de commande de fonctionnement ajuste une ouverture de la soupape de décharge de telle sorte que la quantité réelle d'air d'admission devient la quantité de cible dans un cas où la charge appliquée sur le moteur à combustion interne est équivalente à une pleine charge du moteur à combustion interne.
